# EUROPÄISCHE PATENTSCHRIFT

(11) **EP 0 654 377 B1**
(45) Veröffentlichungstag und Bekanntmachung des Hinweises auf die Patenterteilung: **12.12.2001**
(21) Anmeldenummer: 94114594.8
(22) Anmeldetag: 16.09.1994
(51) Int. Cl.: B60R 1/06

(54) **Rückblickspiegel für Kraftfahrzeuge**
Rear view mirror for motor vehicles
Rétroviseur pour véhicules automobiles

(30) Priorität: 18.11.1993 DE 4339279
(43) Veröffentlichungstag der Anmeldung: 24.05.1995
(73) Patentinhaber: MEKRA Lang GmbH & Co. KG, D-90765 Fürth (DE)
(72) Erfinder: Lang, Heinrich, D-91465 Ergersheim (DE); Seiboth, Wolfgang, D-91438 Bad Windsheim (DE)
(74) Vertreter: Hübner, Gerd, Dipl.-Phys.

(56) Entgegenhaltungen:
- EP-A- 0 306 728
- EP-A- 0 342 412
- GB-A- 1 208 514
- GB-A- 1 532 065
- US-A- 4 957 359

## Beschreibung

Die Erfindung betrifft einen Rückblickspiegel für Kraftfahrzeuge, insbesondere für Nutzfahrzeuge, mit den im Oberbegriff des Patentanspruches 1 angegebenen Merkmalen.

Ein derartiger Rückblickspiegel ist aus der EP-A-0 342 412 bekannt. Hierbei ist ein als Hohlkörper ausgebildeter Spiegelscheibenträger mit einer fest in dessen Wannenöffnung sitzender Spiegelscheibe versehen. Der Hohlkörper umgrenzt einen Montageraum, in dem zwei motorische Stellantriebe zur ferngesteuerten Schwenkverstellung des Spiegelscheibenträgers und damit der Spiegelscheibe montiert sind. Der Spiegelscheibenträger ist über ein Schwenkgelenk mittels eines Befestigungskopfes an einer zur Karosserie des Kraftwagens führenden Haltearm verbunden.

Da der wannenförmige Spiegelscheibenträger bei diesem bekannten Rückblickspiegel im Inneren den Verstellmechanismus aufweist, ist er nicht frei gestaltbar. Insoweit sind seine aerodynamischen Eigenschaften verbesserungsbedürftig. Ferner ist der wannenförmige Spiegelscheibenträger bei diesem Rückblickspiegel ungeschützt.

Ein andersartiger Rückblickspiegel ist aus der US-PS 3,609,014 bekannt. Hierbei ist im Gehäuse des Spiegels ein Schwenklager in Form einer gehäusefest montierten Gelenkkugel angeordnet, auf der mit einer entsprechenden Kugelkalotte ein im wesentlichen plattenförmiger Spiegelscheibenträger schwenkbar gelagert ist. Auf dem Spiegelscheibenträger ist eine Spiegelscheibe befestigt, die durch eine Verschwenkung des Spiegelscheibenträgers relativ zum Gehäuse verstellbar ist.

Bei dem vorbekannten Rückblickspiegel ist zwischen dem Spiegelscheibenträger und dem Gehäuse ein motorischer Stellantrieb vorgesehen, der über einen Spindelantrieb mit dem Spiegelscheibenträger gekoppelt ist, womit eine ferngesteuerte Schwenkverstellung des Spiegelscheibenträgers und damit der Spiegelscheibe relativ zum Gehäuse möglich ist.

Nachteilig bei diesem vorbekannten Rückblickspiegel ist, daß der motorische Stellantrieb tief im Inneren des Gehäuses zwischen dessen Rückseite und dem Spiegelscheibenträger angeordnet ist. Damit ist dessen Montage schwierig und der Rückblickspiegel z.B. bei einem Defekt des motorischen Stellantriebes wenig reparaturfreundlich, da der gesamte Spiegelscheibenträger unter Öffnung der Schwenkgelenkverbindung und Lösung der Ankopplung des Spindeltriebes abgebaut werden muß.

Weiterhin ist die in der vorgenannten US-Patentschrift gezeigte Konstruktion nicht dazu geeignet, als Einfach-Version ohne motorischen Stellantrieb verwendet zu werden. Aufgrund der konstruktiven Ausgestaltung des Schwenkgelenkes ist dieses nämlich relativ instabil, so daß zur weiteren Abstützung des Spiegelscheibenträgers der mit dem motorischen Stellantrieb gekoppelte Spindelantrieb notwendig ist, der den Spiegelscheibenträger zusätzlich abstützt.

Aus US-A-4 957 359 ist ein Rückblickspiegel bekannt, bei dem eine Spiegelscheibe auf einem Spiegelscheibenträger sitzt. Letzerer ist mit einer Kugelschale versehen, die Teil eines Schwenkgelenkes zur Verstellung der Spiegelscheibe bildet. In der Kugelschale ist eine elektromagnetische Gelenksperr-Einrichtung montiert.

GB-A-1 532 065 zeigt einen ähnlichen Spiegel, bei dem der Spiegelscheibenträger ausgebaucht gestaltet ist und insofern zusammen mit der darauf sitzenden Spiegelscheibe einen Hohlraum bildet. In diesem sind keinerlei Montageeinrichtungen vorgesehen.

Der Erfindung liegt die Aufgabe zugrunde, einen Rückblickspiegel der gattungsgemäßen Art so weiterzubilden, daß die eingangs geschilderten Nachteile des bekannten Spiegels gemäß EP-A-0 342 412 vermieden werden.

Diese Aufgabe wird durch die im Kennzeichnungsteil des Anspruches 1 angegebenen Merkmale gelöst, wonach der Rückblickspiegel mit einem Gehäuse versehen ist, in dem der Spiegelscheibenträger mit Spiegelscheibe und Schwenkgelenk untergebracht ist.

Im übrigen ist allgemein anzumerken, daß durch die Ausgestaltung des Spiegelscheibenträgers als Hohlkörper ein besonders leicht zugänglicher, exponiert liegender Montageraum für die Aufnahme von motorischen Stellantrieben geschaffen wird, was die Montage- und Reparaturfreundlichkeit des erfindungsgemäßen Rückblickspiegels gewährleistet. Darüber hinaus wird durch diese Ausgestaltung die Voraussetzung dafür geschaffen, daß der erfindungsgemäße Rückblickspiegel in der Art eines Baukastensystems in einer Einfach-Version als manuell verstellbarer Spiegel unter Weglassen der motorischen Stellantriebe oder in einer Komfort-Version als ferngesteuert verstellbarer Spiegel unter Plazierung von motorischen Stellantrieben im Montageraum des Spiegelscheibenträgers realisiert werden kann.

Weitere Merkmale, Einzelheiten und Vorteile der Erfindung ergeben sich aus den Unteransprüchen und der nachfolgenden Beschreibung, in der Ausführungsbeispiele des Erfindungsgegenstandes anhand der beiliegenden Figuren näher erläutert werden. Es zeigen:
- **Fig. 1**: 1 eine Seitenansicht eines erfindungsgemäßen Rückblickspiegels in einer ersten Ausführungsform,
- Fig. 2: eine Ansicht des Spiegels aus Pfeilrichtung II gemäß Fig. 1,
- Fig. 3: einen Horizontalschnitt durch den Spiegel entlang der Schnittlinie III-III nach Fig. 1,
- Fig. 4: einen Horizontalschnitt des Rückblickspiegels analog Fig. 3 in einer Einfach-Version ohne motorische Stellantriebe,
- Fig. 5: einen Vertikallängsschnitt durch einen Rückblickspiegel in einer zweiten Ausführungsform,
- Fig. 6: einen Horizontalschnitt des Spiegels entlang der Schnittlinie VI-VI nach Fig. 5,
- Fig. 7: einen Horizontallängsschnitt durch einen Rückblickspiegel in einer dritten Ausführungsform und
- Fig. 8: einen Horizontalschnitt des Spiegels entlang der Schnittlinie VIII-VIII nach Fig. 7.

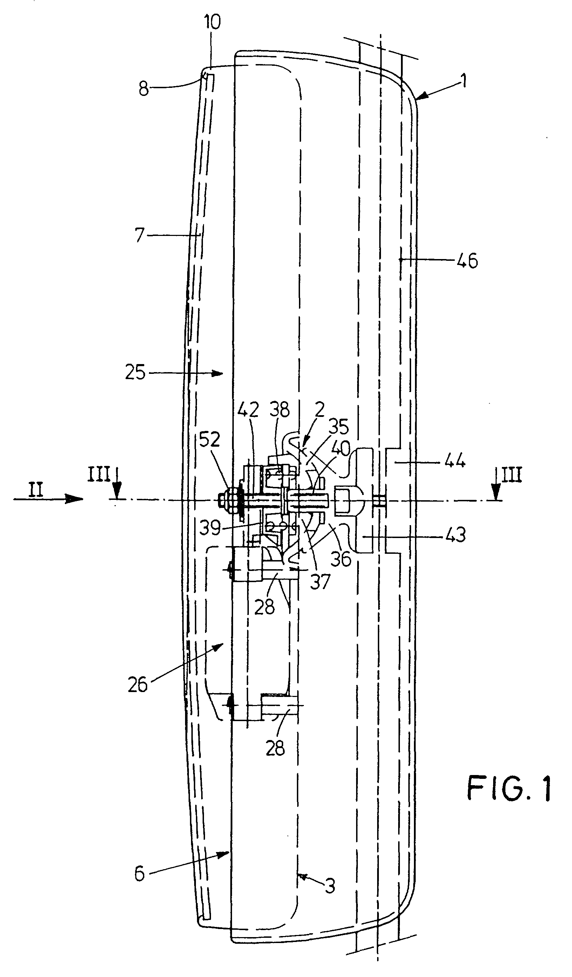

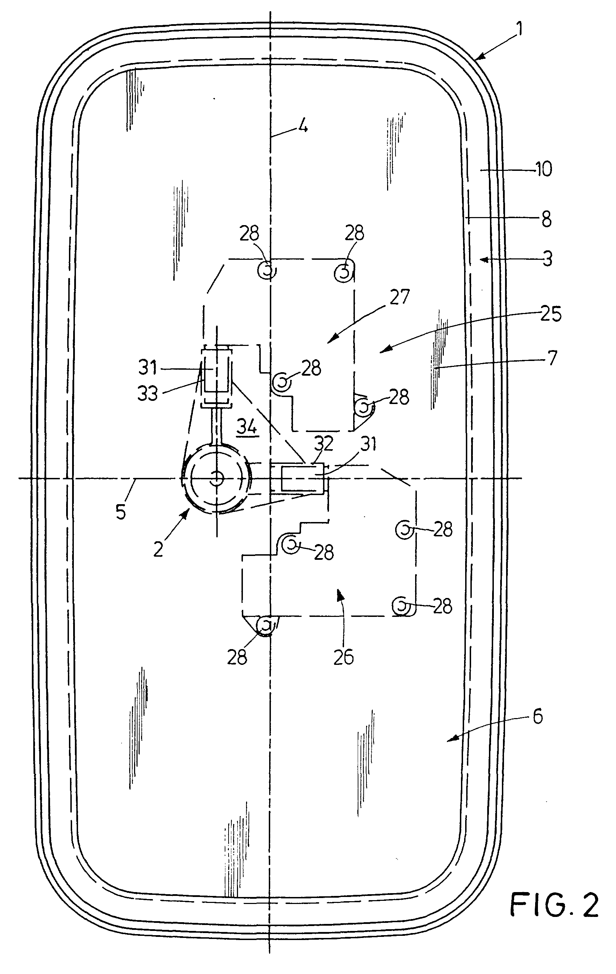

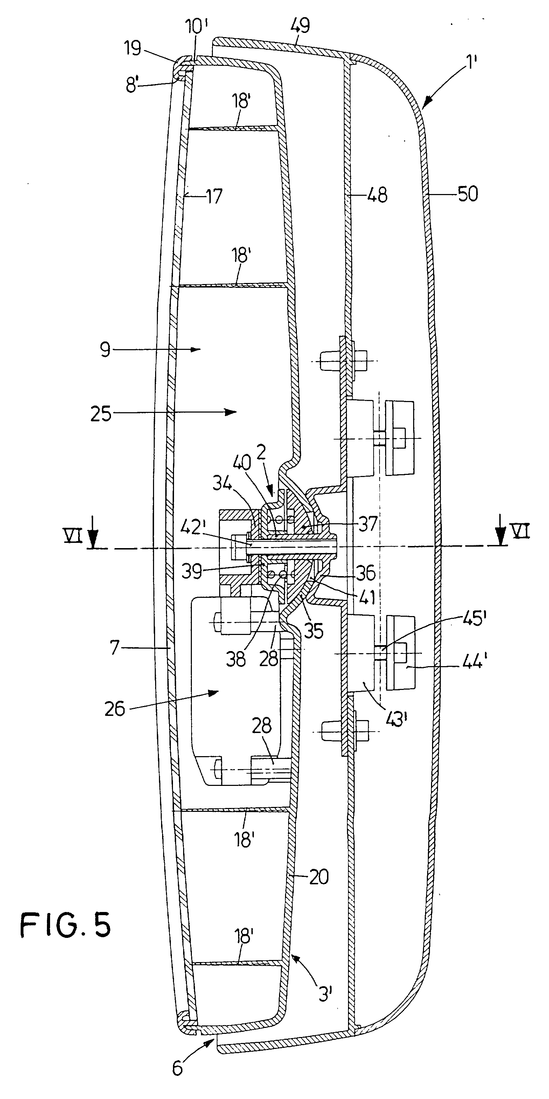

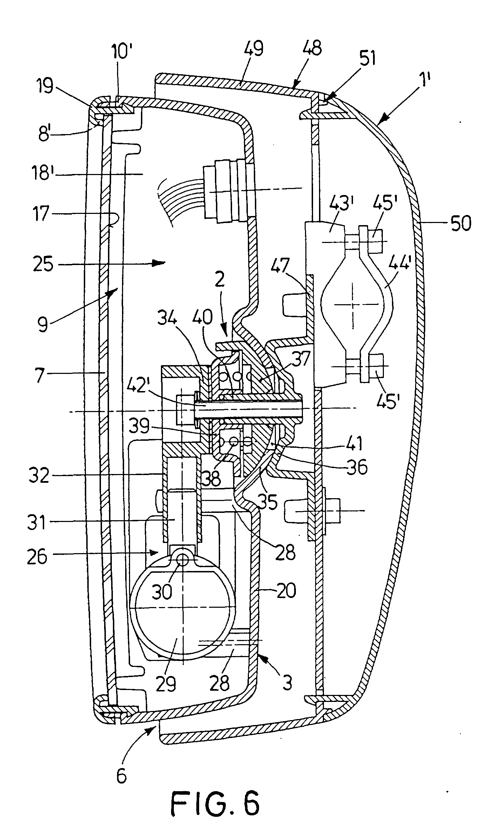

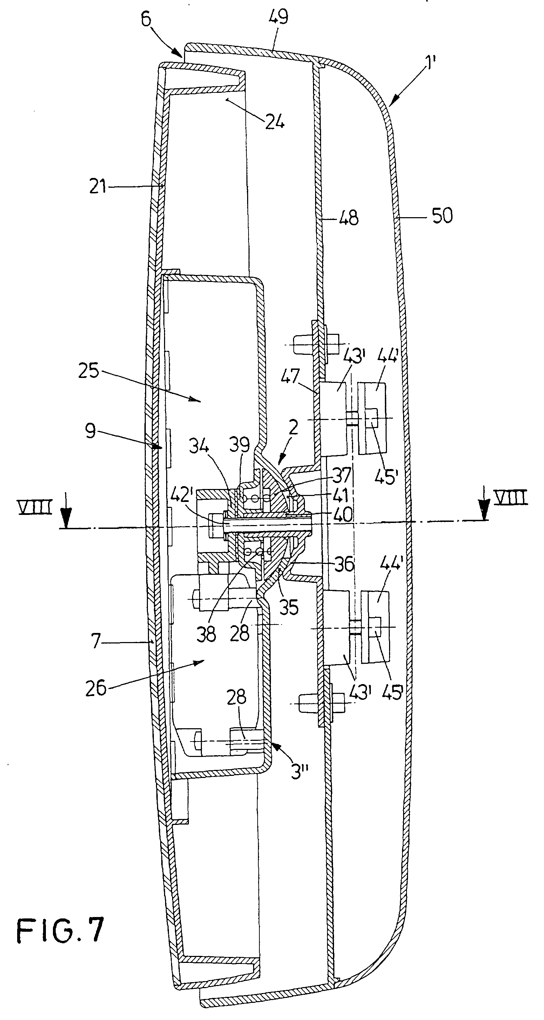

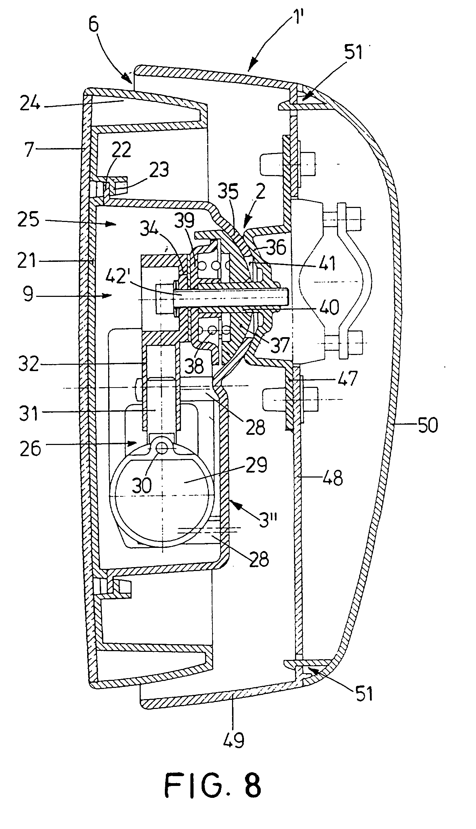

Die in den Fig. 1 bis 8 gezeigten drei Ausführungsformen eines erfindungsgemäßen Rückblickspiegels weisen ein Gehäuse 1 (Fig. 1 bis 4) bzw. 1' (Fig. 5 bis 8) auf, das auf seiner Außenseite die bei solchen Spiegeln übliche aerodynamisch abgerundete Wannenform zeigt. Etwa zentral im Gehäuse 1,1' ist ein als sogenanntes Universalgelenk ausgebildetes Schwenkgelenk 2 angeordnet, an dem ein Spiegelscheibenträger 3 (Fig. 1 bis 4) bzw. 3' (Fig. 5,6) bzw. 3" (Fig. 7,8) um zwei Hauptschwenkachsen 4,5 (Fig. 2) schwenkbar gelagert ist. Die Spiegelscheibenträger 3,3',3" sind dabei in der Ebene der Offenseite 6 des Gehäuses 1,1' angeordnet. Sie sind als wannenförmiger Hohlkörper ausgebildet, wobei im Bereich ihrer Offenseite 6 die Spiegelscheibe 7 befestigt ist. Bei dem Ausführungsbeispiel gemäß den Fig. 1 bis 4 ist die Spiegelscheibe 7 hinter einen schmalen, ringförmig umlaufenden Ringvorsprung 8 eingerastet, der von dem die Offenseite 9 des Spiegelscheibenträgers 3 umgrenzenden Rand 10 des Spiegelscheibenträgers 3 nach innen absteht. Auf ihrer Rückseite weist die Spiegelscheibe 7 eine aufgeklebte Heizfolie 11 auf, die durch elektrische Zuleitungen 12 mit Strom versorgt wird.

Der Spiegelscheibenträger 3 gemäß Fig. 1 bis 4 ist in einer parallel zur Spiegelscheibenebene verlaufenden Ebene 13 in ein Basisteil 14 und ein darauf gesetztes Rahmenteil 15 zweigeteilt. Letzteres trägt - wie erörtert - die Spiegelscheibe 7 im Bereich seiner Offenseite 9. Die Verbindung zwischen Basis- 14 und Rahmenteil 15 erfolgt über eine Verrastung 16, die durch komplementäre Rastausnehmungen und -vorsprünge vom Basis- 14 und Rahmenteil 15 gebildet ist. Vom Basisteil 14 erstrecken sich zur Rückseite 17 der Spiegelscheibe 7 Stützstege 18, die die Spiegelscheibe 7 von ihrer Rückseite 17 her abstützen. Damit ist die Spiegelscheibe 7 zwischen dem Ringvorsprung 8 und den Stützstegen 18 lagestabil gehalten.

Bei dem in den Fig. 5 und 6 gezeigten Ausführungsbeispiel ist der Spiegelscheibenträger 3' einstückig ausgebildet, wobei die Spiegelscheibe 7 in der Offenseite des Spiegelscheibenträgers 3' durch einen Haltering 19 befestigt ist, der auf den Rand 10' aufgeschoben und geeignet fixiert ist. Der Haltering 19 weist wiederum einen Ringvorsprung 8' auf, der nach innen und zur Spiegelscheibe 7 hin gebogen verläuft und die Spiegelscheibe 7 festhält. Von ihrer Rückseite 17 her ist die Spiegelscheibe 7 wiederum durch Stützstege 18' abgestützt, die einstückig an die Basis 20 des Spiegelscheibenträgers 3' angeformt sind.

Bei dem in den Fig. 7 und 8 dargestellten Ausführungsbeispiel nimmt der wannenförmige, einstückig ausgebildete Spiegelscheibenträger 3" nur etwa die Hälfte der Höhe der Spiegelscheibe 7 und nur etwa 2/3 deren Breite ein. Die Befestigung der Spiegelscheibe 7 an der Offenseite 9 des Spiegelscheibenträgers 3" erfolgt über eine Halteplatte 21, auf die die Spiegelscheibe 7 mit ihrer Rückseite 17 aufgeklebt ist. Zur Verbindung der Halteplatte 21 mit dem Spiegelscheibenträger 3" sind komplementäre Vorsprünge 22, 23 an der Offenseite 9 des Spiegelscheibenträgers 3" bzw. der Rückseite der Halteplatte 21 vorgesehen, die eine sogenannte Klemmschlußverbindung herstellen, wie sie Gegenstand der deutschen Patentanmeldung P 43 02 950.7 ist. Auf diese Anmeldung wird zur Vermeidung unnötiger Erläuterungen Bezug genommen.

Die Halteplatte 21 weist randseitig einen einstückig angeformten, umlaufenden Kragen 24 auf, mit der der Abstandsspalt zwischen der Spiegelscheibe 7 und dem Gehäuse 1' auf das für eine ungehinderte Verschwenkung der Spiegelscheibe im Gehäuse 1' notwendige Maß beschränkt wird. Bei den Ausführungsbeispielen gemäß Fig. 1 bis 4 bzw 5,6 wird diese Funktion durch die Seitenwand des wannenförmigen Spiegelscheibenträgers 2 bzw. 3' erfüllt.

Der Spiegelscheibenträger 3,3',3" umgrenzt durch seine Ausgestaltung als Wannenkörper einen Montageraum 25, in den motorische Stellantriebe 26,27 eingesetzt werden können. Diese Stellantriebe 26,27 sind in üblicher Weise Elektromotoren, die auf einstückig an die Basis 20 des Spiegelscheibenträgers 3,3',3" angeformte Lagerhülsen 28 angeschraubt sind. Die Stellantriebe 26,27 sind also ortsfest am Spiegelscheibenträger 3,3',3" angebracht.

Das bewegliche Stellteil der Verstellantriebe 26,27 ist jeweils durch eine Kurbelscheibe 29 gebildet, an der über ein Kurbelgelenk 30 eine Schubstange 31 angelenkt ist. Jede der Schubstangen 31 ist in einer der Führungshülsen 32,33 (Fig. 2) in deren Längsrichtung verschiebbar und um deren Längsachse verdrehbar geführt. Die beiden Führungshülsen 32,33 sind einstückig an eine im wesentlichen dreieckige Kopplungsplatte 34 angeformt, die mit den gehäusefesten Teilen des Schwenkgelenks 2 in noch zu erläuternder Weise fest verbunden ist. Die Kopplungsplatte 34 ist also gehäusefest abgestützt.

Das als sphärisches Universalgelenk ausgebildete Schwenkgelenk 2 besteht einerseits aus einem sphärischen Lagerring 35, der einstückig mit dem Basisteil 14 bzw. der Basis 20 des Spiegelscheibenträgers 3 bzw. 3',3" ausgeformt ist. Der Lagerring 35 ist zwischen einem gehäusefesten sphärischen Lagerteil 36, das auf der Rückseite des Spiegelscheibenträgers 3,3',3" gelegen ist, und einem sphärischen Lagerdeckel auf der der Spiegelscheibe 7 zugewandten Seite des Spiegelscheibenträgers 3,3',3" unter Reibschluß eingeklemmt. Der Lagerdeckel 37 stützt sich über eine Druckfeder 38 an einem Widerlagerdeckel 39 ab, der auf einer Distanzhülse 40 sitzt. Letztere steht zentral vom Lagerteil 36 ab und durchgreift unter großem Spiel die Innenöffnung 41 des Lagerrings 35 sowie den Lagerdeckel 37. Der Widerlagerdeckel 39 ist zusammen mit der Kopplungsplatte 34 fest mit der Distanzhülse 40 verschraubt. Damit wirken also der Widerlagerdeckel 39 mit der Befestigungsschraube 42 als gehäusefestes Abstützteil für die Kopplungsplatte 34.

Die gehäusefeste Anordnung des Lagerteils 36 wird bei dem Ausführungsbeispiel gemäß den Fig. 1 bis 4 dadurch erreicht, daß das Lagerteil 36 mit einem einstückig angeformten Klemmlagerteil 43 versehen ist, welches mit einer Klemmschelle 44 zusammenwirkt. Mittels der aus Klemmlagerteil 43, Klemmschelle 44 und die Befestigungsschrauben 45 gebildeten Klemmvorrichtung wird der Spiegel auf ein das Gehäuse 1 in vertikaler Richtung durchsetzendes Halterohr 46 aufgeklemmt, das die Verbindung zur (nicht dargestellten) Karrosserie des Fahrzeuges herstellt. Das Gehäuse 1 wird dabei gleichzeitig über die Befestigungsschrauben 45 mit der Klemmschelle 44 und damit mit dem Lagerteil 36 fest verbunden.

Bei den Ausführungsformen gemäß den Fig. 5,6 bzw. 7,8 ist das Lagerteil 36 integrales Teil einer Trägerplatte 47, die zwei einstückig angeformte Klemmlagerteile 43' mit jeweils entsprechender Klemmschelle 44' und Befestigungsschrauben 45' aufweist. Klemmlagerteile 43', Klemmschellen 44' und Befestigungsschrauben 45' bilden wiederum eine Klemmvorrichtung zur Befestigung des Spiegels an einem (in den Fig. 5 bis 8 nicht dargestellten) Halterohr für den Spiegel. An der Trägerplatte 47 ist von der der Spiegelscheibe 7 abgewandten Seite her ein wannenförmiges Gehäusebasisteil 48 aufgeschraubt, das mit seiner umlaufenden Seitenwand 49 den Schwenkraum des Spiegelscheibenträgers 3', 3" umgrenzt. Von der den Spiegelscheibenträger 3',3" abgewandten Rückseite des Basisteils 48 her ist ein Abdeckteil 50 auf das Gehäusebasisteil 48 aufgerastet (Verrastung 51 in Fig. 6,8 ).

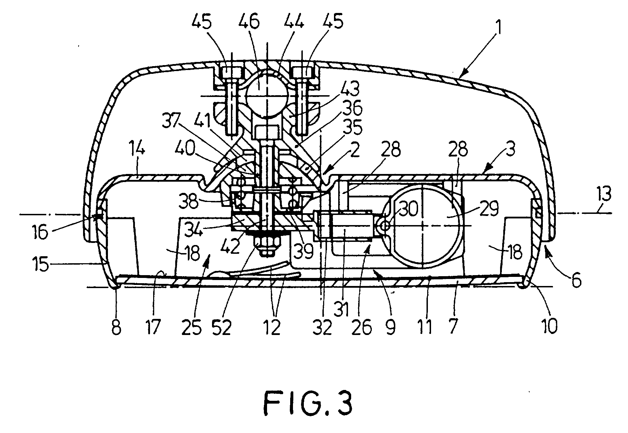

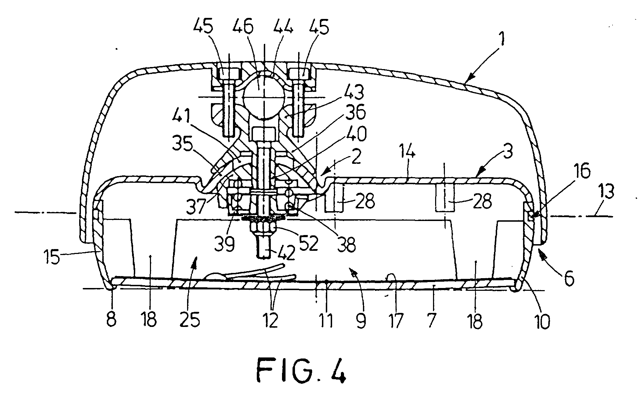

Wie durch eine Gegenüberstellung der Fig. 3 und 4 deutlich gemacht werden kann, sind die in den Fig. 1 bis 8 gezeigten Spiegel derart ausgestaltet, daß sie nach Art eines Baukastensystems entweder mit motorischen Stellantrieben 26,27 bestückt, oder ohne diese Stellantriebe als rein manuell verstellbare Spiegel ausgelegt werden können. Wird ein ferngesteuert verstellbarer Komfortspiegel verlangt, so werden die motorischen Stellantriebe 26,27 wie anhand der Fig. 1 bis 3 und 5 bis 8 erläutert, in den Spiegelscheibenträger 3,3',3" eingesetzt. In diesem Falle dient der Stellantrieb 26 zur Verschwenkung des Spiegelscheibenträgers 3,3',3" um die vertikale Hauptschwenkachse 4, wogegen der motorische Stellantrieb 27 zur Verschwenkung des Spiegelscheibenträgers 3,3',3" um die horizontale Hauptschwenkachse 5 dient. Wird nun zum Beispiel der motorische Stellantrieb 26 so betätigt, daß die Kurbelscheibe 29 sich im Uhrzeigersinn dreht, stützt sich die Schubstange 31 in der gehäusefesten Führungshülse 32 ab, so daß der Spiegelscheibenträger 3 um die vertikale Hauptschwenkachse 4 ebenfalls im Uhrzeigersinn verschwenkt wird. Zum Ausgleich der Distanzänderung zwischen der gehäusefesten Führungshülse 32 und dem Kurbelgelenk 30 zieht sich dabei die Schubstange 31 aus der Führungshülse 32 um den entsprechenden Längenbetrag heraus.

Soll der Spiegel als Einfach-Version nur manuell verschwenkt werden, so brauchen lediglich die Stellantriebe 26,27 mit Kurbelscheibe und Schubstange sowie die Kopplungsplatte 34 weggelassen zu werden. Ansonsten kann der komplette Spiegelaufbau beibehalten werden. Beim Zusammenbau des Schwenkgelenks 2 braucht lediglich die Mutter 52 (Fig. 4) weiter auf die Befestigungsschraube 42 aufgeschraubt zu werden, bzw. die Befestigungsschraube 42' weiter in die Distanzhülse 40 eingeschraubt zu werden (Fig. 5 bis 8). Ein derartiger manuell verstellbarer Spiegel kann auch sehr einfach mit den Stellantrieben 26,27 nachgerüstet werden.

## Patentansprüche

1. Rückblickspiegel für Kraftfahrzeuge, insbesondere für Nutzfahrzeuge, mit
- einem mittels eines Schwenkgelenkes (2) schwenkbar gelagerten Spiegelscheibenträger (3,3',3"), und
- einer am Spiegelscheibenträger (3,3',3") angeordneten Spiegelscheibe (7), wobei der Spiegelscheibenträger (3,3',3") als Hohlkörper ausgebildet ist, der einen Montageraum (25) umgrenzt, in den mindestens ein motorischer Stellantrieb (26,27) zur ferngesteuerten Schwenkverstellung des Spiegelscheibenträgers (3,3',3") und damit der Spiegelscheibe (7) montierbar ist, **dadurch gekennzeichnet, daß** der Rückblickspiegel mit einem Gehäuse (1,1') versehen ist, in dem der Spiegelscheibenträger (3,3',3") mit Spiegelscheibe (7) und Schwenkgelenk (2) untergebracht ist.

2. Rückblickspiegel nach Anspruch 1, **dadurch gekennzeichnet, daß** der Spiegelscheibenträger (3,3',3") als zur Spiegelscheibe (7) hin offener, wannenförmiger Hohlkörper ausgebildet ist.

3. Rückblickspiegel nach Anspruch 1 oder 2, **dadurch gekennzeichnet, daß** der Spiegelscheibenträger (3) in einer parallel zur Spiegelscheibenebene verlaufenden Ebene (13) in ein Basisteil (14) und ein darauf gesetztes Rahmenteil (15) zweigeteilt ist, das die Spiegelscheibe (7) trägt.

4. Rückblickspiegel nach einem der Ansprüche 1 bis 3, **dadurch gekennzeichnet, daß** in den Spiegelscheibenträger (3,3',3") in Richtung zur Spiegelscheibe (7) hin abstehende Stützstege (18,18') zur rückseitigen Unterstützung der Spiegelscheibe (7) eingeformt sind.

5. Rückblickspiegel nach Anspruch 1 oder 2, **dadurch gekennzeichnet, daß** zur Befestigung der Spiegelscheibe (7) auf dem Spiegelscheibenträger (3") eine Halteplatte (21) mit dem Spiegelscheibenträger (3") verbindbar ist, auf der die Spiegelscheibe (7) fixiert ist.

6. Rückblickspiegel nach einem der Ansprüche 1 bis 5, **dadurch gekennzeichnet, daß** der mindestens eine motorische Stellantrieb (26,27) im Montageraum (25) des Spiegelscheibenträgers (3,3',3") relativ zu diesem ortsfest angebracht und sein bewegliches Stellteil (29) mit einem relativ zum Gehäuse (1,1') ortsfesten Abstützteil (39, 42,42') gelenkig gekoppelt ist.

7. Rückblickspiegel nach Anspruch 6, **dadurch gekennzeichnet, daß** das Schwenkgelenk (2) als sphärisches Universalgelenk ausgebildet ist, bei dem ein am Spiegelscheibenträger (3,3',3") angeformter, sphärischer Lagerring (35) zwischen einem gehäusefesten, spärischen Lagerteil (36) auf der Rückseite des Spiegelscheibenträgers (3,3',3") und einem sphärischen Lagerdeckel (37) auf der Innenseite des Spiegelscheibenträgers (3,3',3") unter Reibschluß eingeklemmt ist, wobei sich der Lagerdeckel (37) an einem gehäusefesten Widerlagerteil (39) auf der Innenseite des Spiegelscheibenträgers (3,3',3") abstützt, welches Widerlagerteil (39) gleichzeitig Abstützteil für das bewegliche Stellglied (29) des mindestens einen Stellantriebes (26,27) ist.

8. Rückblickspiegel nach Anspruch 7, **dadurch gekennzeichnet, daß** der mindestens eine Stellantrieb (26,27) mit seinem beweglichen Stellglied (29) über ein Schubkurbelgetriebe (30, 31) mit einer gehäusefesten Kopplungsplatte (34) verbunden ist, die an dem Widerlagerteil (39, 42,42') des Universalgelenks gehäusefest anbringbar ist.

9. Rückblickspiegel nach Anspruch 8, **dadurch gekennzeichnet, daß** das mindestens eine Schubkurbelgetriebe eine Kurbelscheibe (29) aufweist, die mit der Kopplungsplatte (34) über eine an der Kurbelscheibe (29) angelenkte Schubstange (31) verbunden ist, die in einer Führungshülse (32,33) der Kopplungsplatte (34) verschiebbar geführt ist.

10. Rückblickspiegel nach einem der Ansprüche 1 bis 9, **dadurch gekennzeichnet, daß** der Rückblickspiegel nach Art eines Baukastensystems als manuell verstellbarer Spiegel unter Weglassung des mindestens einen motorischen Stellantriebes (26,27) oder als ferngesteuert verstellbarer Spiegel unter Plazierung des mindestens einen motorischen Stellantriebes (26,27) im Montageraum (25) des Spiegelscheibenträgers (3,3',3") realisierbar ist.

## Claims

1. A rear view mirror for motor vehicles, in particular for commercial vehicles, comprising
- a mirror glass support (3, 3', 3") supported by means of a pivot joint (2) to be pivotable, and
- a mirror glass (7) disposed on the mirror glass support (3, 3', 3"), wherein the mirror glass support (3, 3', 3") is a hollow defining an installation chamber (25), into which at least one servomotor (26, 27) is installable for the remote-controlled pivotal adjustment of the mirror glass support (3, 3', 3") and thus of the mirror glass (7), **characterized in that** the rear view mirror is provided with a housing (1,1'), accommodating the mirror glass support (3, 3', 3") with the mirror glass (7) and the pivot joint.

2. A rear view mirror according to claim 1, **characterized in that** the mirror glass support (3, 3', 3") is a hollow pan open towards the mirror glass (7).

3. A rear view mirror according to claim 1 or 2, **characterized in that** on a plane (13) extending parallel to the mirror glass plane, the mirror glass support (3) is divided into a base member (14) and a frame member (15) placed thereon and carrying the mirror glass (7).

4. A rear view mirror according to one of the claims 1 to 3, **characterized in that** supporting webs (18, 18') projecting towards the mirror glass (7) are molded in the mirror glass support (3, 3', 3") to support the rear of the mirror glass (7).

5. A rear view mirror according to claim 1 or 2, **characterized in that** a holding plate (21), on which the mirror glass (7) is fixed, is attachable to the mirror glass support (3") for the fastening of the mirror glass (7) to the mirror glass support (3").

6. A rear view mirror according to one of the claims 1 to 5, **characterized in that** the at least one servomotor (26, 27) is arranged in the installation chamber (25) of the mirror glass support (3, 3', 3") to be stationary relative to the latter and **in that** its movable positioning element (29) is coupled by articulation with a support member (39, 42, 42') stationary relative to the housing (1, 1').

7. A rear view mirror according to claim 6, **characterized in that** the pivot joint (2) is a spherical universal joint, in which a spherical bearing ring (35) molded on the mirror glass support (3, 3', 3") is clamped by frictional locking between a spherical bearing member (36) fixed to the housing (1) and disposed on the rear of the mirror glass support (3, 3', 3") and a spherical bearing cover (37) on the inside of the mirror glass support (3, 3', 3"), the bearing cover (37) supporting itself on an abutment member (39) fixed to the housing (1) and disposed on the inside of the mirror glass support (3, 3', 3"), which abutment member (39) is simultaneously the support member for the movable positioning element (29) of the at least one servomotor (26, 27).

8. A rear view mirror according to claim 7, **characterized in that** the movable positioning element (29) of the at least one servomotor (26, 27) is linked with the coupling plate (34), fixed to the housing (1), by way of a slider crank mechanism (30, 31), the coupling plate (34) being attachable on the abutment member (39, 42, 42') in a manner fixed to the housing (1).

9. A rear view mirror according to claim 8, **characterized in that** the at least one slider crank mechanism comprises a crank disc (29) linked with the coupling plate (34) by way of a connecting rod (31) articulated on the crank disc (29) and guided in a guide sleeve (32, 33) of the coupling plate (34).

10. A rear view mirror according to one of the claims 1 to 9, **characterized in that** the rear view mirror is feasible, in the way of a unit assembly system, as a manually adjustable mirror by the at least one servomotor (26, 27) being omitted, or as a remote-controlled adjustable mirror by the at least one servomotor (26, 27) being placed in the installation chamber (25) of the mirror glass support (3, 3', 3").

## Revendications

1. Rétroviseur pour véhicule automobile, en particulier pour véhicule utilitaire, comprenant :
- un porte-miroir (3, 3', 3") monté avec faculté de pivotement au moyen d'une articulation de pivotement (2), et
- une plaque de miroir (7) agencée sur le porte-miroir (3, 3', 3"),
dans lequel le porte-miroir (3, 3', 3") est réalisé sous la forme d'un corps creux qui entoure une chambre de montage (25) dans laquelle est monté au moins un entraînement de positionnement motorisé (26, 27) destiné à déplacer en pivotement et de manière commandée à distance le porte-miroir (3, 3', 3") et avec lui la plaque de miroir (7),
**caractérisé en ce que** le rétroviseur est pourvu d'un boîtier (1, 1') dans lequel sont logés le porte-miroir (3, 3', 3") avec la plaque de miroir (7) et l'articulation de pivotement (2).

2. Rétroviseur selon la revendication 1, **caractérisé en ce que** le porte-miroir (3, 3', 3") est réalisé sous forme d'un corps creux en forme de cuvette, ouvert en direction de la plaque de miroir (7).

3. Rétroviseur selon l'une ou l'autre des revendications 1 et 2, **caractérisé en ce que** le porte-miroir (3) est subdivisé en deux parties dans un plan (13) qui s'étend parallèlement au plan de la plaque de miroir, à savoir une partie de base (14), et une partie de cadre (15) posée sur celle-ci, qui porte la plaque de miroir (7).

4. Rétroviseur selon l'une des revendications 1 à 3, **caractérisé en ce que** des barrettes de soutien (18, 18'), destinées à soutenir la plaque de miroir (7) du côté postérieur sont formées dans le porte-miroir (3, 3', 3") en dépassement en direction de la plaque de miroir (7).

5. Rétroviseur selon l'une ou l'autre des revendications 1 et 2, **caractérisé en ce que** pour la fixation de la plaque de miroir (7) sur le porte-miroir (3"), il est prévu une plaque de maintien (21), susceptible d'être reliée au porte-miroir (3") et sur laquelle est fixée la plaque de miroir (7).

6. Rétroviseur selon l'une des revendications 1 à 5, **caractérisé en ce que** ledit au moins un entraînement de positionnement motorisé (26, 27) est monté dans la chambre de montage (25) du porte-miroir (3, 3', 3") de manière stationnaire par rapport à celui-ci, et **en ce que** sa partie de positionnement mobile (29) est accouplée de façon articulée avec une partie de soutien (39, 42, 42') stationnaire par rapport au boîtier (1, 1').

7. Rétroviseur selon la revendication 6, **caractérisé en ce que** l'articulation de pivotement (2) est réalisée sous la forme d'un joint universel sphérique, dans lequel une bague de palier (35) sphérique formée sur le porte-miroir (3, 3', 3") est coincée par coopération de friction entre une partie de palier (36) sphérique et solidaire du boîtier sur le côté postérieur du porte-miroir (3, 3', 3") et un couvercle de palier (37) sphérique sur le côté intérieur du porte-miroir (3, 3', 3"), et **en ce que** le couvercle de palier (37) s'appuie sur une portée complémentaire (39) solidaire du boîtier du côté intérieur du porte-miroir (3, 3', 3"), ladite portée complémentaire (37) étant simultanément la partie de soutien pour l'organe de positionnement mobile (29) dudit au moins un entraînement de positionnement (26, 27).

8. Rétroviseur selon la revendication 7, **caractérisé en ce que** ledit au moins un entraînement de positionnement (26, 27) est relié, par son organe de positionnement mobile (29) et par l'intermédiaire d'une transmission à bielle poussée (30, 31), à une plaque d'accouplement (34) solidaire du boîtier, laquelle est susceptible d'être montée sur la portée complémentaire (39, 42, 42') du joint universel.

9. Rétroviseur selon la revendication 8, **caractérisé en ce que** ladite au moins une transmission à bielle poussée comprend un disque de bielle (29) relié à la plaque d'accouplement (34) par l'intermédiaire d'une tige poussée (31), articulée sur le disque de bielle (29) et guidée en translation dans une douille de guidage (32, 33) de la plaque d'accouplement (34).

10. Rétroviseur selon l'une des revendications 1 à 9, **caractérisé en ce que** le rétroviseur est réalisé à la manière d'un système modulaire, soit sous la forme d'un miroir à réglage manuel en omettant l'entraînement de positionnement motorisé (26, 27), soit sous la forme d'un miroir réglable sous l'action d'une commande à distance, en plaçant ledit au moins un entraînement de positionnement motorisé (26, 27) dans la chambre de montage (25) du porte-miroir (3, 3', 3").
